(19) Europäisches Patentamt
European Patent Office
Office européen des brevets

(11) **EP 4 329 046 B1**

(12) **EUROPEAN PATENT SPECIFICATION**

(45) Date of publication and mention
of the grant of the patent:
**30.07.2025   Bulletin 2025/31**

(21) Application number: **22919062.4**

(22) Date of filing: **20.12.2022**

(51) International Patent Classification (IPC):
*H01M 10/48* (2006.01)     *H01M 10/42* (2006.01)
*G01L 5/00* (2006.01)      *G01L 1/22* (2006.01)
*H01M 50/242* (2021.01)    *H01M 50/579* (2021.01)

(52) Cooperative Patent Classification (CPC):
**G01L 5/0052; G01L 1/2262; H01M 10/42;
H01M 10/425; H01M 10/48; H01M 50/242;
H01M 50/579;** H01M 2010/4271; Y02E 60/10

(86) International application number:
**PCT/KR2022/020848**

(87) International publication number:
**WO 2023/132525 (13.07.2023 Gazette 2023/28)**

(54) **BATTERY PACK INCLUDING IMPACT SENSING MODULE**

BATTERIEPACK MIT STOSSERFASSUNGSMODUL

BLOC-BATTERIE COMPRENANT UN MODULE DE DÉTECTION D'IMPACT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **06.01.2022   KR 20220002194**

(43) Date of publication of application:
**28.02.2024   Bulletin 2024/09**

(73) Proprietor: **LG ENERGY SOLUTION, LTD.
Seoul 07335 (KR)**

(72) Inventor: **AHN, Chi Ho
Daejeon 34122 (KR)**

(74) Representative: **Plasseraud IP
104 Rue de Richelieu
CS92104
75080 Paris Cedex 02 (FR)**

(56) References cited:
EP-A1- 3 054 523        WO-A2-2013/027945
JP-A- 2003 059 484      JP-A- H06 230 023
JP-B2- 6 176 213        KR-A- 20020 089 104
KR-A- 20120 061 401     KR-B1- 101 040 471
US-A1- 2011 129 705

Description

## TECHNICAL FIELD

The present invention relates to a battery pack with a shock detection module, and more particularly, to a battery pack capable of controlling a pack operation in accordance with strength of a shock by detecting the strength of the shock step by step with a voltage change according to the connection of a resistor caused by the shock.

## BACKGROUND ART

A battery is widely used in various fields ranging from a small electronic device such as a smartphone, laptop, and tablet PC to an electric vehicle and an energy storage system (ESS).

A battery (pack) is typically composed of a configuration including a plurality of the assembly each of which includes a plurality of unit cells, and the cell includes a positive electrode current collector, a separator, an active material, an electrolyte solution, an aluminum thin film layer, etc., and thus has a structure capable of charging and discharging by an electrochemical reaction between the components.

In addition to this basic structure for charging and discharging, the battery is additionally configured with a physical protection device, various sensing means, firmware applied with a precise algorithm for estimating a state of charge (SOC), etc., from the cell to the battery through the assembly.

When a physical shock is applied to such a battery (pack), deformation of the physical form such as a pouch, housing, frame, etc. of the battery or the cells constituting the battery may be caused, which may lead to a change in resistance or electrical characteristic value of the battery or the cell.

However, conventionally, there is no means for detecting an external shock on the battery pack and controlling or blocking the pack operation, and there is a problem in that the safety of the battery pack due to a physical shock is not secured.

As prior art related to the present invention, there is a following document.

Patent document 1: KR 1053352 B1

Furthermore, document US 2011/129705 discloses a battery pack capable of preventing problems from occurring due to the damage of a secondary battery when external shock is applied.

Document JP 2003/059484 discloses a battery y capable of detecting the bulging of a case caused by overcharge and the deformation of the case.

Document WO2013/027945 discloses a device for improving stability of a secondary battery.

## DISCLOSURE OF THE INVENTION

## TECHNICAL PROBLEM

The present invention is intended to solve the problems described above, and to provide a battery pack configured to detect a strength of a shock applied to the battery pack step by step by applying a shock detection module structure to a BMS and perform BMS control for this.

## TECHNICAL SOLUTION

In order to solve the problems described above, the present invention provides a battery pack as defined in the appended claims.

The present invention also provides a battery pack shock detecting method of detecting an external shock state.

## ADVANTAGEOUS EFFECTS

The present invention can provide improved safety against an external shock by detecting strength of the shock step by step through a voltage change according to the connection of a resistor caused by the shock and controlling the operation of the battery pack according to the strength of shock.

## BRIEF DESCRIPTION OF THE DRAWINGS

FIG. 1 is a diagram schematically illustrating a battery pack according to an embodiment of the present invention.

FIG. 2 is a diagram illustrating a configuration of a shock detection module according to an embodiment of the present invention.

FIG. 3 is a diagram schematically illustrating the shock detection module of FIG. 2 as a circuit.

FIG. 4 is a diagram illustrating an operation of the shock detection module assuming a case in which a weak shock is applied to the battery pack.

FIG. 5 is a diagram illustrating an operation of the shock detection module assuming a case in which a strong shock is applied to the battery pack.

FIG. 6 is a diagram illustrating an example of voltage measurements when a strong shock is applied to the battery pack.

## MODE FOR CARRYING OUT THE INVENTION

Hereinafter, embodiments of the present invention will be described in detail with reference to the accompanying drawings so that those of ordinary skill in the art can easily carry out the present invention. However, the present invention may be embodied in various different forms and is not limited to the embodiments described herein. In order to clearly explain the present invention in the drawings, parts irrelevant to the description are omitted, and similar reference numerals are assigned to similar parts throughout the specification.

Hereinafter, the present invention will be described in detail with reference to the drawings.

1. Battery pack according to the present invention

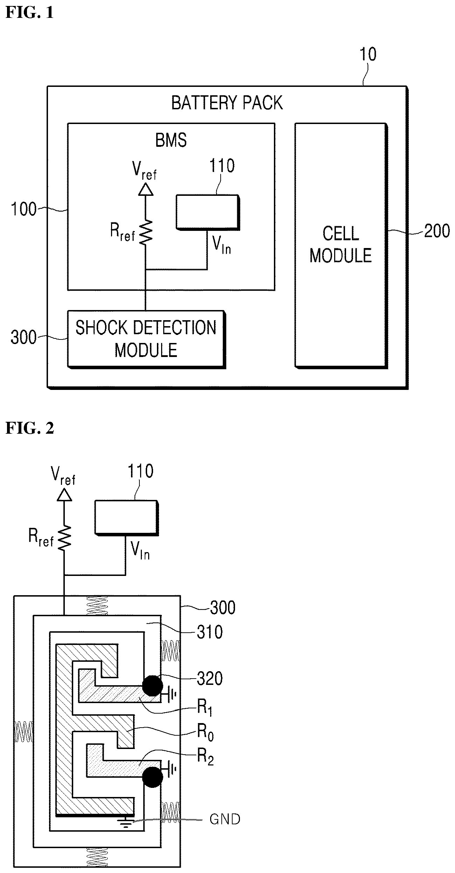

FIG. 1 is a diagram schematically illustrating a battery pack according to an embodiment of the present invention.

Referring to FIG. 1, a battery pack 10 of the present invention largely includes a BMS module (also referred to as a BMS herein) 100, a cell module 200, and a shock detection module 300.

1.1. BMS module 100

As illustrated in FIG. 1, the BMS module 100 according to the present invention is configured to include a reference voltage source $V_{ref}$ for implementing shock detection, a reference resistor $R_{ref}$ connected to the reference voltage source $V_{ref}$, and a voltage measurement unit 110 that measures a distributed voltage $V_{In}$ at a connection point between the reference resistor $R_{ref}$ and a measurement resistor pattern (also referred to as a measurement resistor herein) $R_0$ formed in the shock detection module 300 to be described later, and may further include a control unit (not illustrated) to be described later.

1.2. Cell module 200

The cell module 200 may include one or more battery cells (not illustrated).

1.3. Shock detection module 300

FIG. 2 is a diagram illustrating a configuration of the shock detection module according to an embodiment of the present invention.

The shock detection module 300 has a configuration capable of detecting the strength of a shock applied to the battery pack 10 step by step, and may include the following configurations.

The shock detection module 300 of the present invention may be installed on a different part of the battery pack by being formed on a separate board from the BMS module described above, or may be disposed together on a PCB board on which the BMS module is formed.

1.3.1. Non-conductive barrier wall 310

The non-conductive barrier wall (also referred to as the non-conductive barrier rib herein) 310 is configured to be connected to a case of the battery pack 10 with an elastic body so that displacement occurs according to vibration of the battery pack 10, or configured to be connected to a board on which the non-conductive barrier wall 310 is formed with an elastic body.

As illustrated in FIG. 2, the non-conductive barrier wall 310 is formed to surround the measurement resistor pattern $R_0$ to be described later.

Here, the elastic body may be implemented as, for example, a spring having restoring force.

1.3.2. Measurement resistor pattern $R_0$

The measurement resistor pattern $R_0$ is formed inside the non-conductive barrier wall 310 be spaced apart therefrom and one end thereof is connected to the reference resistor $R_{ref}$.

1.3.3. First and second resistors $R_1$ and $R_2$

The first and second resistors $R_1$ and $R_2$ are respectively connected to ends of the non-conductive barrier 310 and one ends thereof are respectively connected to a ground GND. More specifically, the first and second resistors $R_1$ and $R_2$ have a form in which they are respectively connected to both ends of the non-conductive barrier wall 310 through hinges 320, and one ends thereof are respectively connected to the ground GND and the other ends thereof are respectively disposed adjacent to the measurement resistor pattern $R_0$.

As illustrated in FIG. 2, the other ends of the first resistor $R_1$ and the second resistor $R_2$ are disposed adjacent to the measurement resistor pattern ($R_0$) at a predetermined interval or less, and an interval at which the first resistor $R_1$ is disposed adjacent to the measurement resistor pattern $R_0$ and an interval at which the second resistor $R_2$ is disposed adjacent to the measurement resistor pattern $R_0$ are set to be different from each other. Due to this difference in disposition interval, when vibration is applied to a battery pack case by a shock from the outside of the battery pack 10, a displacement occurs in the non-conductive barrier wall 310 fixed by a spring, and the first and second resistors $R_1$ and $R_2$ connected thereto come into contact with the measurement resistor pattern $R_0$, such that a change occurs in a distributed voltage value $V_{In}$ measured by the voltage measurement unit 110 of the BMS 100.

The hinges 320 have a restoring force, and mechanically prevent the connection between the first and second resistors $R_1$ and $R_2$ and the non-conductive barrier wall 310 from being damaged even if a very large displacement occurs in the non-conductive barrier 310 due to an external shock. In addition, when the non-conductive barrier wall 310 returns to its original position after the shock, the restoring force of the hinges may be set such that the first and second resistors are separated from the measurement resistor pattern $R_0$ or remain in contact with the measurement resistor pattern $R_0$. In these different cases, changes may be made to a determination of a shock level and a control of an operation of the battery pack, which will be described later. For example, depending on a case, in setting the hinges 320 so that the first resistor and the second resistor come in contact with the measurement resistor pattern $R_0$ for a while according to the occurrence of displacement and then separate, the restoring force strength of the hinges may be set so that the hinge displaces and returns with a time difference from the return of the non-conductive barrier wall 310 in order for the first resistor and the second resistor to be in contact with the measurement resistor pattern for a predetermined time or more to give a sufficient distributed-voltage measurement time, and the degree of the restoring force of the hinges may be set so that the positions of the first and second resistors are not restored even if the non-conductive barrier wall 310 returns, if necessary.

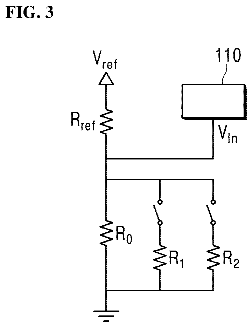

FIG. 3 is a diagram schematically illustrating the shock detection module of FIG. 2 as a circuit. Referring to FIG. 3, the distributed voltage measurement value $V_{In}$ detected by the voltage measurement unit 110 of the BMS 100 due to the voltage distribution between the reference resistor $R_{ref}$ and the measurement resistor $R_0$ is expressed by the following equation.

(Equation 1)

$$V_{In} = \frac{R_0}{R_{ref} + R_0} \cdot V_{ref}$$

1.4. Control unit (not illustrated)

The control unit may compare whether or not a predetermined shock arrival condition is satisfied based on the distributed voltage measurement value $V_{In}$ detected by the voltage measurement unit 110, and determine a shock level according to the comparison result. In addition, the control unit may control an operation of the battery pack in response to the determination result.

1.4.1. Comparison and determination unit

The comparison and determination unit compares whether or not an external shock currently applied to the battery pack reaches the predetermined shock level using the distributed voltage measurement value detected by the voltage measurement unit 110, and determine the degree of external shock depending on whether the shock level is reached or not.

<Case 1: State without shock>

The comparison and determination unit compares whether the distributed voltage measurement value of the voltage measurement unit 110 is the same as the first reference voltage value, and determines that there is no shock applied to the battery pack when they are the same.

When an operating state of the shock detection module is as shown in FIGS. 2 and 3, the distributed voltage measurement value $V_{In}$ of the voltage measurement unit 110 has the same value as the first reference voltage value.

Here, the first reference voltage value may be a value calculated by (Equation 1) described above.

<Case 2: State in which a weak shock is continuously applied>

The comparison determining unit counts a pulse cycle in which the distributed voltage measurement value of the voltage measurement unit 110 goes back and forth between the first reference voltage value and a second reference voltage value, compares whether the counted number of times has reached a predetermined number of shocks, and determines that a weak shock is continuously applied to the battery pack when the counted number of times has reached the predetermined number of shocks.

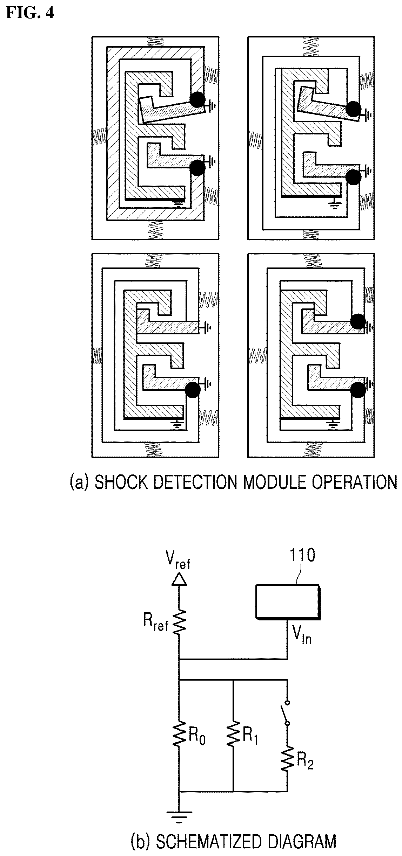

FIG. 4 is a diagram illustrating an operation of a shock detection module assuming a case in which a weak shock is applied to the battery pack.

Referring to FIG. 4, as described above, since a gap between the measurement resistor $R_0$ and the first resistor $R_1$ and a gap between the measurement resistor $R_0$ and the second resistor $R_2$ are differentially arranged, even when the measurement resistor $R_0$ and the first resistance $R_1$ come into contact with each other due to the weak shock, the measurement resistor $R_0$ and the second resistor $R_2$ do not come into contact with each other. When this state is schematized into a circuit as shown in (b) of FIG. 4 and the weak shock is applied, if a distributed voltage measurement value $V_{Inw}$ detected by the voltage measurement unit 110 is calculated, it is expressed by the following equation.

(Equation 2)

$$V_{Inw} = \frac{\dfrac{R_0 + R_1}{R_0 R_1}}{R_{ref} + \dfrac{R_0 + R_1}{R_0 R_1}} \cdot V_{ref}$$

Due to the continuous residual shock applied from the external environment, the measurement resistor $R_0$ and the first resistor $R_1$ may repeat a contacting state and a noncontacting state, and a voltage level is also detected in the form of a pulse going back and forth between the first and second reference voltages in accordance with the shock. Using this principle, in one embodiment, a case in which a slight shock is continuously applied to the battery pack may be determined by comparing whether the pulse cycle, in which the distributed voltage measurement value of the voltage measurement unit 110 alternates between the first reference voltage value and the second reference voltage value, has reached a predetermined number of shocks. In another embodiment, a case in which the weak shock to the battery pack is continuously applied may be determined by comparing whether or not the distributed voltage measurement value $V_{In}$ is continuously detected as the same value as the second reference voltage value for a predetermined number of shocks, after the distributed voltage measurement value $V_{In}$ of the voltage measurement unit 110 is initially detected as the same value as the first reference voltage value.

Here, the second reference voltage value may be a value calculated by (Equation 2) above.

<Case 3: State where strong shock is applied>

The comparison and determination unit compares whether the distributed voltage measurement value $V_{In}$ of the voltage measurement unit 110 has reached a third reference voltage value, and determines that a strong shock has been applied to the battery pack when it has reached the third reference voltage value.

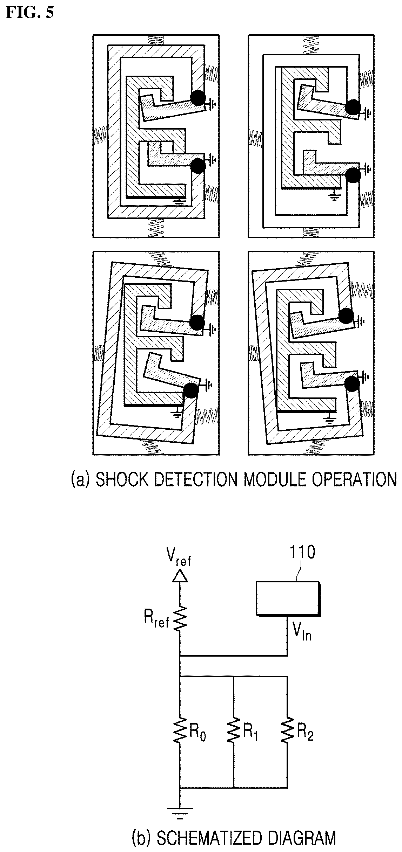

FIG. 5 is a diagram illustrating an operation of the shock detection module assuming a case in which a strong shock is applied to the battery pack.

Referring to FIG. 5, when the non-conductive barrier 310 is shaken violently by the strong shock, the measurement resistor $R_0$ and the first and second resistors $R_1$ and $R_2$ all come into contact with each other. When this is schematized into a circuit as shown in (b) of FIG. 5 and a distributed voltage measurement value $V_{Ins}$ detected by the voltage measurement unit 110 is calculated, it is expressed by the following equation.

(Equation 3)

$$V_{Ins} = \frac{\dfrac{R_0 R_1 + R_1 R_2 + R_0 R_2}{R_0 R_1 R_2}}{R_{ref} + \dfrac{R_0 R_1 + R_1 R_2 + R_0 R_2}{R_0 R_1 R_2}} \cdot V_{ref}$$

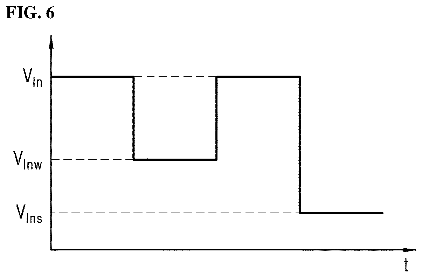

In this case, the voltage of $V_{Ins}$ compared to $V_{In}$ and $V_{Inw}$ is lowered. When comparing the magnitudes of the three voltage values, it can be expressed in the form of a graph as illustrated in FIG. 6.

1.4.2. Pack operation control unit

The pack operation control unit may perform operation control of the battery pack in response to the determination result of the comparison and determination unit.

As the determination result, when it is determined that it is a general state in which there is no external shock, a normal operation of the battery pack can be maintained.

On the other hand, as the determination result, when it is determined that it is a state in which the weak shock is continuously applied, a higher level of safety control operation can be performed than a case where it is the general state in which there is no external shock.

On the other hand, as the determination result, when it is determined that it is a state in which a strong shock is applied, a higher level of safety control operation can be performed than a case where it is a state in which the weak shock is continuously applied.

The control unit (not illustrated) may be implemented as a conventional battery BMS included in the BMS module 100 described above and a processor included therein, but is characterized in that it performs the characteristic functions of the present invention described above. In this case, the voltage measurement unit 110 described above may be included as one configuration of the BMS.

2. Battery pack shock detecting method according to the present invention

A battery pack shock detecting method according to an embodiment of the present invention is implemented by configuring the reference voltage source $V_{ref}$ for implementing shock detection and the reference resistor $R_{ref}$ connected to the reference voltage source $V_{ref}$ on a BMS board and applying the shock detection module 300 including the non-conductive barrier wall 310 connected to a case of the battery pack with an elastic body, the measurement resistor pattern $R_0$ which is formed inside the non-conductive barrier wall 310 to be spaced apart therefrom, whose one end is connected to the reference resistor $R_{ref}$, and which is formed on the board to be fixed, and the first and second resistors $R_1$ and $R_2$ respectively connected to both ends of the non-conductive barrier wall 310 through the hinges 320 and respectively having one end disposed adjacent to the measurement resistor pattern $R_0$ and the other end connected to the ground GND.

2.1. Distributed-voltage measurement step

The distributed-voltage measurement step is a step of measuring a distributed voltage at a connection point between the reference resistor $R_{ref}$ connected to the reference voltage source $V_{ref}$ for implementing shock detection on the BMS board and the measurement resistor $R_0$ of the shock detection module. This step is performed by the voltage measurement unit 110 of the BMS 100 described above.

2.2. Whether-a-shock-arrival-condition-is-satisfied comparison step

The whether-a-shock-arrival-condition-is-satisfied comparison step is a step of comparing whether or not the predetermined shock arrival condition is satisfied based on the distributed voltage value measured in the distributed-voltage measurement step.

<Case 1: State without shock>

In the case 1, whether the measured distributed voltage value is the same as the first reference voltage value may be compared.

Here, the first reference voltage value may be a value calculated by (Equation 1) described above.

<Case 2: State in which a weak shock is continuously applied>

In the case 2, the number of cycles in which the measured distributed voltage value alternates between the first reference voltage value and the second reference voltage value can be counted and whether or not the counted number has reached a predetermined number of shocks can be compared.

On the other hand, in another embodiment, whether or not the distributed voltage measurement value is continuously detected as the same value as the second reference voltage value for a predetermined number of shocks, after the distributed voltage measurement value is initially detected as the same value as the first reference voltage value, can be compared.

Here, the second reference voltage value may be a value calculated by (Equation 2) described above.

<Case 3: State where strong shock is applied>

In the case 3, whether the measured distributed voltage value has reached the third reference voltage value can be compared.

Here, the third reference voltage value may be a value calculated by (Equation 3) described above.

2.3. Shock state determination step

In the shock state determination step, the degree of shock applied to the battery pack can be determined according to the comparison result in the whether-a-shock-arrival-condition-is-satisfied comparison step.

<Case 1: State without external impact>

In the case 1, when the measured distributed voltage value is the same as the first reference voltage value as the result in the whether-a-shock-arrival-condition-is-satisfied comparison step, it can be determined it is a state in which there is no external shock applied to the current battery pack.

<Case 2: State in which a weak shock is continuously applied>

In the case 2, as a result in the whether-a-shock-arrival-condition-is-satisfied comparison step, when the number of cycles in which the measured distributed voltage value alternates between the first reference voltage value and a second reference voltage value has reached a predetermined number of shocks, or when the number of times the measured distributed voltage value is continuously detected as the same value as the second reference voltage value after the measured distributed voltage value is initially detected as the same value as the first reference voltage value has reached the predetermined number of shocks, it can be determined that it is a state in which a weak shock is continuously applied to the battery pack.

<Case 3: State in which a strong shock is applied>

In the case 3, as the result in the whether-a-shock-arrival-condition-is-satisfied comparison step, when the measured distributed voltage value has reached the third reference voltage value, it can be determined that it is a state in which a strong shock has been applied to the battery pack.

Since the technical principle of determining as above has been described above, a detailed description thereof will be omitted.

2.4. Pack operation control step

The pack operation control step is a step of controlling the operation of the battery pack in response to the determination result in the shock state determination step.

As the determination result, when it is determined that it is a general state in which there is no external shock, a normal operation of the battery pack can be maintained and controlled.

On the other hand, as the determination result, when it is determined that it is a state in which the weak shock is continuously applied to the battery pack, it can be controlled to perform a safety operation of a higher level than the case where it is a state in which there is no external shock.

On the other hand, as a result of the determination, when it is determined that it is a state in which a strong shock is applied to the battery pack, it can be controlled to perform a safety operation of a higher level than a case where it is a state in which the weak shock is continuously applied.

That is, control is performed by increasing the level of the safety control operation step by step according to the degree of shock applied to the battery pack.

Meanwhile, although the technical idea of the present invention has been described in detail according to the above embodiments, it should be noted that the above embodiments are for description and not for limitation. In addition, those skilled in the art will understand that various embodiments are possible within the scope of the present invention.

The reference numerals and signs used in the present invention are as follows.

10: Battery pack
100: BMS
110: Voltage measurement unit
200: Cell module
300: Shock detection module
310: Non-conductive barrier wall
320: Hinge
$V_{ref}$: Reference voltage source
$R_{ref}$: Reference resistor
$R_0$: Measurement resistor
$R_1$: First resistor
$R_2$: Second resistor

**Claims**

1. A battery pack (10) comprising:

   a BMS module (100); and
   a shock detection module (300) that detects a shock strength applied to the battery pack (10), wherein
   the BMS module (100) is configured to comprise

   a reference voltage source ($V_{ref}$) for shock detection,
   a reference resistor ($R_{ref}$) connected to the reference voltage source ($V_{ref}$), and
   a voltage measurement unit (110) that measures a distributed voltage ($V_{In}$) between the reference resistor ($R_{ref}$) and a measurement resistor ($R_0$), and

   the shock detection module (300) is configured to comprise

   a non-conductive barrier wall (310) connected to an inside of a case of the battery pack (10) through an elastic body,
   the measurement resistor ($R_0$) connected to the reference resistor ($R_{ref}$), and
   first and second resistors ($R_1$, $R_2$) each having two ends, one end of both resistors ($R_1$, $R_2$) being connected to ground (GND) and, via a hinge (320), to a respective end of the non-conductive barrier wall (310), the other end being adjacent to the measurement resistor ($R_0$) so that when vibration is applied to the case of the battery pack (10) by a shock from the outside of the battery pack (10), a displacement occurs in the non-conductive barrier wall (310), and the first and second resistors ($R_1$, $R_2$) connected thereto come into contact with the measurement resistor ($R_0$), such that a change occurs in the distributed voltage ($V_{In}$) measured by the voltage measurement unit (110)..

2. The battery pack of claim 1, wherein
   the BMS module (100) is configured to further comprise

   a comparison and determination unit that compares whether a predetermined shock arrival condition is satisfied based on a distributed voltage measurement value of the voltage measurement unit (110) and determines a degree of shock applied to the battery pack (10) according to the comparison result, and
a pack operation control unit that controls an operation of the battery pack (10) in response to the determination result of the comparison and determination unit.

3. The battery pack of claim 1, wherein
the other ends of the first resistor ($R_1$) and the second resistor ($R_2$) are disposed at a predetermined interval or less with respect to the measurement resistor ($R_0$), so that when vibration is applied to the battery pack case, the first and second resistors ($R_1$, $R_2$) come into contact with the measurement resistor ($R_0$) to cause a change in the distributed voltage measurement value of the voltage measurement unit (110).

4. The battery pack of claim 3, wherein
a first interval at which the first resistor ($R_1$) is disposed adjacent to the measurement resistor ($R_0$) is different from a second interval at which the second resistor ($R_2$) is disposed adjacent to the measurement resistor ($R_0$).

5. The battery pack of claim 4, wherein
since the first interval and the second interval are different, the distributed voltage value measured by the voltage measurement unit varies according to the degree of vibration generated in the battery pack.

6. The battery pack of claim 5, wherein

the measurement resistor ($R_0$) is formed at a fixed position on a BMS board constituting the BMS module (100) and includes a contact portion with the first and second resistors ($R_1$, $R_2$), and
the first and second resistors ($R_1$, $R_2$) are connected to the non-conductive barrier wall (310) with an elastic body to have a position change against external vibration.

7. The battery pack of claim 6, wherein
the distributed voltage

is measured as a voltage at the moment when the first and second resistors ($R_1$, $R_2$) come into contact with the measurement resistor ($R_0$), and
is measured as a different value according to a degree of the external vibration.

8. The battery pack of claim 2, wherein
the comparison and determination unit

compares whether the distributed voltage measurement value of the voltage measurement unit (110) is the same as a first reference voltage value, and when they are the same, determines that it is a state in which there is no shock applied to the battery pack (10),
compares whether the number of cycles in which the distributed voltage measurement value of the voltage measurement unit (110) alternates between the first reference voltage value and a second reference voltage value has reached a predetermined number of shocks, and when the number of cycles has reached the predetermined number of shocks, determines that it is a state in which a weak shock is continuously applied to the battery pack (10), and
compares whether the distributed voltage measurement value of the voltage measurement unit has reached a third reference voltage value, and when the distributed voltage measurement value has reached the third reference voltage value, determines that it is a state in which a strong shock has been applied to the battery pack (10).

9. A battery pack shock detecting method of detecting an external shock state in the battery pack according to any one of claims 1 to 8, the battery pack shock detecting method comprising:

a distributed-voltage measurement step of measuring a distributed voltage at a connection point between the reference resistor ($R_{ref}$) connected to the reference voltage source ($V_{ref}$) for implementing shock detection on the BMS board and the measurement resistor ($R_0$) of the shock detection module (300);
a whether-a-shock-arrival-condition-is-satisfied comparison step of comparing whether or not a predetermined shock arrival condition is satisfied based on the distributed voltage value measured in the distributed-voltage measurement step; and
a shock state determination step of determining a degree of shock applied to the battery pack according to the comparison result in the whether-a-shock-arrival-condition-is-satisfied comparison step.

10. The battery pack shock detecting method of claim 9, further comprising:

a pack operation control step of controlling an operation of the battery pack in response to a determination result in the shock state determination step.

11. The battery pack shock detecting method of claim 9, wherein
in the whether-a-shock-arrival-condition-is-satisfied comparison step,

whether the measured distributed voltage value is the same as a first reference voltage value is compared, whether the number of cycles in which the measured distributed voltage value alternates between the first reference voltage value and a second reference voltage value has reached a predetermined number of shocks is compared, and
whether the measured distributed voltage value has reached a third reference voltage value is compared.

12. The battery pack shock detecting method of claim 11, wherein
in the shock state determination step,

when the measured distributed voltage value is the same as the first reference value as a result in the whether-a-shock-arrival-condition-is-satisfied comparison step, it is determined that it is a state in which there is no external shock applied to the battery pack (10),
when the number of cycles in which the measured distributed voltage value alternates between the first reference voltage value and the second reference voltage value has reached a predetermined number of shocks, it is determined that it is a state in which a weak shock is continuously applied to the battery pack (10), and
when the measured distributed voltage value has reached the third reference voltage value, it is determined that it is a state in which a strong shock has been applied to the battery pack (10).

**Patentansprüche**

1. Batteriepack (10), umfassend:

ein BMS-Modul (100); und
ein Erschütterungsdetektionsmodul (300), welches eine auf den Batteriepack (10) ausgeübte Erschütterungsstärke detektiert, wobei
das BMS-Modul (100) derart eingerichtet ist, dass es

eine Referenzspannungsquelle ($V_{ref}$) für eine Erschütterungsdetektion,
einen Referenzwiderstand ($R_{ref}$), welcher mit der Referenzspannungsquelle ($V_{ref}$) verbunden ist, und
eine Spannungsmesseinheit (110) umfasst, welche eine verteilte Spannung ($V_{In}$) zwischen dem Referenzwiderstand ($R_{ref}$) und einem Messwiderstand ($R_0$) misst, und

das Erschütterungsdetektionsmodul (300) derart eingerichtet ist, dass es

eine nicht leitfähige Barrierewand (310), welche durch einen elastischen Körper mit einem Inneren eines Gehäuses des Batteriepacks (10) verbunden ist,
den Messwiderstand ($R_0$), welcher mit dem Referenzwiderstand ($R_{ref}$) verbunden ist, und
einen ersten und einen zweiten Widerstand ($R_1$, $R_2$) umfasst, welche jeweils zwei Enden aufweisen, wobei ein Ende beider Widerstände ($R_1$, $R_2$) mit Masse (GND) und über ein Scharnier (320) mit einem jeweiligen Ende der nicht leitfähigen Barrierewand (310) verbunden ist, wobei das andere Ende benachbart zu dem Messwiderstand ($R_0$) ist, so dass, wenn durch eine Erschütterung von außerhalb des Batteriepacks (10) eine Vibration auf das Gehäuse des Batteriepacks (10) ausgeübt wird, eine Verlagerung in der nicht leitfähigen Barrierewand (310) auftritt und der erste und der zweite Widerstand ($R_1$, $R_2$), welche damit verbunden sind, in Kontakt mit dem Messwiderstand ($R_0$) gelangen, so dass in der durch die Spannungsmesseinheit (110) gemessenen verteilten Spannung ($V_{In}$) eine Änderung auftritt.

2. Batteriepack nach Anspruch 1, wobei

das BMS-Modul (100) derart eingerichtet ist, dass es ferner

eine Vergleichs- und Bestimmungseinheit, welche auf Grundlage eines Verteilte-Spannung-Messwerts der Spannungsmesseinheit (110) vergleicht, ob eine vorbestimmte Erschütterungseintreffbedingung erfüllt ist, und gemäß dem Vergleichsergebnis einen Grad einer auf den Batteriepack (10) ausgeübten Erschütterung bestimmt, und
eine Packbetriebssteuereinheit umfasst, welche in Reaktion auf das Bestimmungsergebnis der Vergleichs- und Bestimmungseinheit einen Betrieb des Batteriepacks (10) steuert.

3. Batteriepack nach Anspruch 1, wobei
die anderen Enden des ersten Widerstands ($R_1$) und des zweiten Widerstands ($R_2$) in Bezug auf den Messwiderstand ($R_0$) in einem vorbestimmten Intervall oder weniger angeordnet sind, so dass, wenn eine Vibration auf das Batteriepackgehäuse ausgeübt wird, der erste und der zweite Widerstand ($R_1$, $R_2$) derart in Kontakt mit dem Messwiderstand ($R_0$) gelangen, dass sie eine Änderung in dem Verteilte-Spannung-Messwert der Spannungsmesseinheit (110) bewirken.

4. Batteriepack nach Anspruch 3, wobei
ein erstes Intervall, in welchem der erste Widerstand ($R_1$) benachbart zu dem Messwiderstand ($R_0$) angeordnet ist, von einem zweiten Intervall verschieden ist, in welchem der zweite Widerstand ($R_2$) benachbart zu dem Messwiderstand ($R_0$) angeordnet ist.

5. Batteriepack nach Anspruch 4, wobei,
da das erste Intervall und das zweite Intervall verschieden sind, der durch die Spannungsmesseinheit gemessene Verteilte-Spannung-Wert gemäß dem Grad einer in dem Batteriepack erzeugten Vibration variiert.

6. Batteriepack nach Anspruch 5, wobei

der Messwiderstand ($R_0$) auf einer BMS-Platine, welche das BMS-Modul (100) ausmacht, an einer festen Position gebildet ist und einen Kontaktabschnitt mit dem ersten und dem zweiten Widerstand ($R_1$, $R_2$) umfasst und
der erste und der zweite Widerstand ($R_1$, $R_2$) mit einem elastischen Körper derart mit der nicht leitfähigen Barrierewand (310) verbunden sind, dass sie eine Positionsänderung gegen eine externe Vibration aufweisen.

7. Batteriepack nach Anspruch 6, wobei

die verteilte Spannung
als eine Spannung in dem Moment gemessen wird, wenn der erste und der zweite Widerstand ($R_1$, $R_2$) in Kontakt mit dem Messwiderstand ($R_0$) gelangen, und
als ein verschiedener Wert gemäß einem Grad der externen Vibration gemessen wird.

8. Batteriepack nach Anspruch 2, wobei
die Vergleichs- und Bestimmungseinheit

vergleicht, ob der Verteilte-Spannung-Messwert der Spannungsmesseinheit (110) der gleiche ist wie ein erster Referenzspannungswert, und, wenn sie die gleichen sind, bestimmt, dass es ein Zustand ist, in welchem keine auf den Batteriepack (10) ausgeübte Erschütterung vorhanden ist,
vergleicht, ob die Anzahl von Zyklen, in welchen der Verteilte-Spannung-Messwert der Spannungsmesseinheit (110) zwischen dem ersten Referenzspannungswert und einem zweiten Referenzspannungswert wechselt, eine vorbestimmte Anzahl von Erschütterungen erreicht hat, und, wenn die Anzahl von Zyklen die vorbestimmte Anzahl von Erschütterungen erreicht hat, bestimmt, dass es ein Zustand ist, in welchem eine schwache Erschütterung kontinuierlich auf den Batteriepack (10) ausgeübt wird, und
vergleicht, ob der Verteilte-Spannung-Messwert der Spannungsmesseinheit einen dritten Referenzspannungswert erreicht hat, und, wenn der Verteilte-Spannung-Messwert den dritten Referenzspannungswert erreicht hat, bestimmt, dass es ein Zustand ist, in welchem eine starke Erschütterung auf den Batteriepack (10) ausgeübt worden ist.

9. Batteriepackerschütterungsdetektionsverfahren eines Detektierens eines Zustands einer externen Erschütterung in dem Batteriepack nach einem der Ansprüche 1 bis 8, wobei das Batteriepackerschütterungsdetektionsverfahren umfasst:

einen Verteilte-Spannung-Messchritt eines Messens einer verteilten Spannung an einem Verbindungspunkt zwischen dem Referenzwiderstand ($R_{ref}$), welcher mit der Referenzspannungsquelle ($V_{ref}$) verbunden ist, um eine Erschütterungsdetektion an der BMS-Platine zu implementieren, und dem Messwiderstand ($R_0$) des Erschütterungsdetektionsmoduls (300);

einen Ob-Eine-Erschütterungseintreffbedingung-Erfüllt-Ist-Vergleichsschritt eines Vergleichens, ob eine vorbestimmte Erschütterungseintreffbedingung erfüllt ist oder nicht, auf Grundlage des in dem Verteilte-Spannung-Messchritt gemessenen Verteilte-Spannung-Werts; und

einen Erschütterungszustandsbestimmungsschritt eines Bestimmens eines Grads einer auf den Batteriepack ausgeübten Erschütterung gemäß dem Vergleichsergebnis in dem Ob-Eine-Erschütterungseintreffbedingung-Erfüllt-Ist-Vergleichsschritt.

**10.** Batteriepackerschütterungsdetektionsverfahren nach Anspruch 9, ferner umfassend:

einen Packbetriebssteuerschritt eines Steuerns eines Betriebs des Batteriepacks in Reaktion auf ein Bestimmungsergebnis in dem Erschütterungszustandsbestimmungsschritt.

**11.** Batteriepackerschütterungsdetektionsverfahren nach Anspruch 9, wobei
in dem Ob-Eine-Erschütterungseintreffbedingung-Erfüllt-Ist-Vergleichsschritt

verglichen wird, ob der gemessene Verteilte-Spannung-Wert der gleiche ist wie ein erster Referenzspannungswert,

verglichen wird, ob die Anzahl von Zyklen, in welchen der gemessene Verteilte-Spannung-Wert zwischen dem ersten Referenzspannungswert und einem zweiten Referenzspannungswert wechselt, eine vorbestimmte Anzahl von Erschütterungen erreicht hat, und

verglichen wird, ob der gemessene Verteilte-Spannung-Wert einen dritten Referenzspannungswert erreicht hat.

**12.** Batteriepackerschütterungsdetektionsverfahren nach Anspruch 11, wobei
in dem Erschütterungszustandsbestimmungsschritt,

wenn als ein Ergebnis in dem Ob-Eine-Erschütterungseintreffbedingung-Erfüllt-Ist-Vergleichsschritt der gemessene Verteilte-Spannung-Wert der gleiche ist wie der erste Referenzwert, bestimmt wird, dass es ein Zustand ist, in welchem keine auf den Batteriepack (10) ausgeübte externe Erschütterung vorhanden ist,

wenn die Anzahl von Zyklen, in welchen der gemessene Verteilte-Spannung-Wert zwischen dem ersten Referenzspannungswert und dem zweiten Referenzspannungswert wechselt, eine vorbestimmte Anzahl von Erschütterungen erreicht hat, bestimmt wird, dass es ein Zustand ist, in welchem eine schwache Erschütterung kontinuierlich auf den Batteriepack (10) ausgeübt wird, und

wenn der gemessene Verteilte-Spannung-Wert den dritten Referenzspannungswert erreicht hat, bestimmt wird, dass es ein Zustand ist, in welchem eine starke Erschütterung auf den Batteriepack (10) ausgeübt worden ist.

## Revendications

**1.** Bloc-batterie (10) comprenant :

un module BMS (100) ; et
un module de détection de choc (300) qui détecte une force de choc appliquée au bloc-batterie (10), dans lequel
le module BMS (100) est configuré pour comprendre
une source de tension de référence ($V_{ref}$) pour une détection de choc,
une résistance de référence ($R_{ref}$) connectée à la source de tension de référence ($V_{ref}$), et
une unité de mesure de tension (110) qui mesure une tension distribuée ($V_{In}$) entre la résistance de référence ($R_{ref}$) et une résistance de mesure ($R_0$), et
le module de détection de choc (300) est configuré pour comprendre
une paroi barrière non conductrice (310) connectée à un intérieur d'un boîtier du bloc-batterie (10) par l'intermédiaire d'un corps élastique,
la résistance de mesure ($R_0$) connectée à la résistance de référence ($R_{ref}$), et
des première et seconde résistances ($R_1$, $R_2$) ayant chacune deux extrémités, une extrémité des deux résistances ($R_1$, $R_2$) étant connectée à la masse (GND) et, via une charnière (320), à une extrémité respective de la paroi barrière non conductrice (310), l'autre extrémité étant adjacente à la résistance de mesure ($R_0$) de sorte que, lorsqu'une vibration est appliquée au boîtier du bloc-batterie (10) par un choc provenant de l'extérieur du bloc-batterie (10), un déplacement se produit dans la paroi barrière non conductrice (310), et les première et seconde résistances ($R_1$, $R_2$) connectées à celle-ci entrent en contact avec la résistance de mesure ($R_0$), de sorte qu'une modification se produit dans la tension distribuée ($V_{In}$) mesurée par l'unité de mesure de tension (110).

2. Bloc-batterie selon la revendication 1, dans lequel

le module BMS (100) est configuré pour comprendre en outre
une unité d'analyse et de détermination qui analyse si une condition à l'arrivée de choc prédéterminée est satisfaite sur la base d'une valeur de mesure de tension distribuée de l'unité de mesure de tension (110) et détermine un degré de choc appliqué au bloc-batterie (10) selon le résultat d'analyse, et
une unité de commande de fonctionnement de bloc qui commande un fonctionnement du bloc-batterie (10) en réponse au résultat de détermination de l'unité d'analyse et de détermination.

3. Bloc-batterie selon la revendication 1, dans lequel
les autres extrémités de la première résistance ($R_1$) et de la seconde résistance ($R_2$) sont disposées à un intervalle prédéterminé ou moins par rapport à la résistance de mesure ($R_0$), de sorte que lorsqu'une vibration est appliquée au boîtier de bloc-batterie, les première et seconde résistances ($R_1$, $R_2$) entrent en contact avec la résistance de mesure ($R_0$) pour provoquer une modification de la valeur de mesure de tension distribuée de l'unité de mesure de tension (110).

4. Bloc-batterie selon la revendication 3, dans lequel
un premier intervalle selon lequel la première résistance ($R_1$) est disposée à proximité adjacente de la résistance de mesure ($R_0$) est différent d'un second intervalle selon lequel la seconde résistance ($R_2$) est disposée à proximité adjacente de la résistance de mesure ($R_0$).

5. Bloc-batterie selon la revendication 4, dans lequel
étant donné que le premier intervalle et le second intervalle sont différents, la valeur de tension distribuée mesurée par l'unité de mesure de tension varie en fonction du degré de vibration générée dans le bloc-batterie.

6. Bloc-batterie selon la revendication 5, dans lequel

la résistance de mesure ($R_0$) est formée à une position fixe sur une carte BMS constituant le module BMS (100) et comporte une partie de contact avec les première et seconde résistances ($R_1$, $R_2$), et
les première et seconde résistances ($R_1$, $R_2$) sont connectées à la paroi barrière non conductrice (310) avec un corps élastique pour présenter une modification de position à l'encontre d'une vibration externe.

7. Bloc-batterie selon la revendication 6, dans lequel

la tension distribuée
est mesurée en tant que tension au moment où les première et seconde résistances ($R_1$, $R_2$) entrent en contact avec la résistance de mesure ($R_0$), et
est mesurée en tant que valeur différente en fonction d'un degré de la vibration externe.

8. Bloc-batterie selon la revendication 2, dans lequel

l'unité d'analyse et de détermination
analyse si la valeur de mesure de tension distribuée de l'unité de mesure de tension (110) est identique ou non à une première valeur de tension de référence, et lorsqu'elles sont identiques, détermine qu'il s'agit d'un état dans lequel aucun choc n'est appliqué au bloc-batterie (10),
analyse si le nombre de cycles pendant lesquels la valeur de mesure de tension distribuée de l'unité de mesure de tension (110) alterne entre la première valeur de tension de référence et une deuxième valeur de tension de référence a atteint ou non un nombre prédéterminé de chocs, et lorsque le nombre de cycles a atteint le nombre prédéterminé de chocs, détermine qu'il s'agit d'un état dans lequel un faible choc est appliqué en continu au bloc-batterie (10), et
analyse si la valeur de mesure de tension distribuée de l'unité de mesure de tension a atteint ou non une troisième valeur de tension de référence, et lorsque la valeur de mesure de tension distribuée a atteint la troisième valeur de

13

tension de référence, détermine qu'il s'agit d'un état dans lequel un choc puissant a été appliqué au bloc-batterie (10).

9. Procédé de détection de choc de bloc-batterie pour détecter un état de choc externe dans le bloc-batterie selon l'une quelconque des revendications 1 à 8, le procédé de détection de choc de bloc-batterie comprenant :

une étape de mesure de tension distribuée consistant à mesurer une tension distribuée à un point de connexion entre la résistance de référence ($R_{ref}$) connectée à la source de tension de référence ($V_{ref}$) pour mettre en œuvre une détection de choc sur la carte BMS et la résistance de mesure ($R_0$) du module de détection de choc (300) ;
une étape d'analyse si une condition à l'arrivée de choc est satisfaite consistant à comparer si une condition à l'arrivée de choc prédéterminée est satisfaite ou non sur la base de la valeur de tension distribuée mesurée lors de l'étape de mesure de tension distribuée ; et
une étape de détermination d'état de choc consistant à déterminer un degré de choc appliqué au bloc-batterie selon le résultat d'analyse lors de l'étape d'analyse si une condition à l'arrivée de choc est satisfaite.

10. Procédé de détection de choc de bloc-batterie selon la revendication 9, comprenant en outre :
une étape de commande de fonctionnement de bloc consistant à commander un fonctionnement du bloc-batterie en réponse à un résultat de détermination lors de l'étape de détermination d'état de choc.

11. Procédé de détection de choc de bloc-batterie selon la revendication 9, dans lequel lors de l'étape d'analyse si une condition à l'arrivée de choc est satisfaite,

il est analysé si la valeur de tension distribuée mesurée est ou non la même qu'une première valeur de tension de référence,
il est analysé si le nombre de cycles pendant lesquels la valeur de tension distribuée mesurée alterne entre la première valeur de tension de référence et une deuxième valeur de tension de référence a atteint un nombre prédéterminé de chocs, et
il est analysé si la valeur de tension distribuée mesurée a atteint ou non une troisième valeur de tension de référence.

12. Procédé de détection de choc de bloc-batterie selon la revendication 11, dans lequel

lors de l'étape de détermination d'état de choc,
lorsque la valeur de tension distribuée mesurée est la même que la première valeur de référence en résultat de l'étape d'analyse si une condition à l'arrivée de choc est satisfaite, il est déterminé qu'il s'agit d'un état dans lequel aucun choc externe n'est appliqué au bloc-batterie (10),
lorsque le nombre de cycles pendant lesquels la valeur de tension distribuée mesurée alterne entre la première valeur de tension de référence et la deuxième valeur de tension de référence a atteint un nombre prédéterminé de chocs, il est déterminé qu'il s'agit d'un état dans lequel un faible choc est appliqué en continu au bloc-batterie (10), et
lorsque la valeur de tension distribuée mesurée a atteint la troisième valeur de tension de référence, il est déterminé qu'il s'agit d'un état dans lequel un choc puissant a été appliqué au bloc-batterie (10).

**FIG. 1**

**FIG. 2**

**FIG. 3**

**FIG. 4**

(a) SHOCK DETECTION MODULE OPERATION

(b) SCHEMATIZED DIAGRAM

FIG. 5

(a) SHOCK DETECTION MODULE OPERATION

(b) SCHEMATIZED DIAGRAM

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1053352 B1
- US 2011129705 A
- JP 2003059484 A
- WO 2013027945 A